(19) Europäisches Patentamt
European Patent Office
Office européen des brevets

(11) **EP 3 974 400 B1**

(12) **EUROPEAN PATENT SPECIFICATION**

(45) Date of publication and mention
of the grant of the patent:
**09.08.2023 Bulletin 2023/32**

(21) Application number: **20198152.9**

(22) Date of filing: **24.09.2020**

(51) International Patent Classification (IPC):
**C03C 27/02** (2006.01)    **C03B 19/09** (2006.01)
**C03C 27/04** (2006.01)

(52) Cooperative Patent Classification (CPC):
**C03C 27/02; C03C 27/042; C03C 27/044;
C03C 27/046**

(54) **COMPONENT COMPRISING A GLASS ELEMENT AND A BASE BODY, METHOD FOR PRODUCING SUCH AND ITS USE**

KOMPONENTE MIT EINEM GLASELEMENT UND EINEM GRUNDKÖRPER, VERFAHREN ZUR HERSTELLUNG DAVON UND DEREN VERWENDUNG

COMPOSANT COMPORTANT UN ÉLÉMENT DE VERRE ET UN CORPS DE BASE, SON PROCÉDÉ DE PRODUCTION ET SON UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.03.2022 Bulletin 2022/13**

(73) Proprietor: **SCHOTT AG
55122 Mainz (DE)**

(72) Inventors:
• **HETTLER, Robert
84036 Kumhausen (DE)**
• **CHAI, Wee kiat
Singapore 680280 (SG)**

• **NATARAJAN, Saravanan
Singapore 643686 (SG)**
• **XU, Jacky
Nr. 12-755 Singapore 754121 (SG)**
• **CHEN, DaoBing
Nr. 12-353 Singapore 750473 (SG)**

(74) Representative: **Blumbach · Zinngrebe
Patentanwälte PartG mbB
Alexandrastraße 5
65187 Wiesbaden (DE)**

(56) References cited:
**US-A- 4 472 223        US-A- 4 921 738
US-A- 5 243 492        US-A- 5 693 580
US-A1- 2011 031 698**

## Description

Field of invention

The present application relates to components comprising a glass-to-material-seal, such as a glass-to-metal seal or a glass-to-ceramic seal. In particular, the present application relates to a component comprising a metal or ceramic part and a glass window that may be used in a housing for further components, especially such further components that are sensitive, for example to moisture, and need to be sealed.

Background of invention

Glass-to-metal and/or glass-to-ceramic seal technology is used for encapsulating sensor chips or devices which are sensitive or require water proof or dust proof enclosure. It is known to produce the metal parts by stamping or cold forging, for example. Further, CNC machining may be used. However, CNC machining for complex features is a costly method.

US 5 243 492 A relates to a process for fabricating a hermetic feedthrough device. A pin is substantially centered within the feedthrough device and can be electrically connected to the outer portion of the device via a bridge wire to form a header. The invention also provides an eyelet useful in the process and an improved header device having a substantially smooth surface.

US 4 921 738 A relates to a hermetically sealed $Li_2O$-$Al_2O_3$-$SiO_2$ glass ceramic-aluminum containing stainless steel composite body and a method of producing the body and a method for producing the same.

Object of invention

In general, glass-to-metal and/or glass-to-ceramic seal technology is used for encapsulating sensor chips or devices or components which are sensitive or require water proof or dust proof enclosure. It is known to produce the metal parts by stamping or cold forging. Further, CNC machining may be used. However, CNC machining for complex features is a costly method.

Further, metals and glass, as well as glasses and ceramics, have very distinct chemical and mechanical properties so that a hermetic joint between this materials may be difficult to achieve or to maintain over long time spans.

Furthermore, it has been known to use metal bodies, such as steel bodies, for the casing of wearable devices and/or for jewelry products. However, in order to provide a metal-body with a smooth surface in order to decrease its abrasive nature and thus to enhance consumer safety, surfaces of metallic bodies usually undergo material-abrasive post-processing, such as polishing.

As an alternative to metals, ceramic materials may be used, for example, ceramic injection molded ceramic parts. Even though ceramic materials may be favorable from a chemical inertness point of view, as these materials usually do not contain harmful metals such as nickel, for example, still ceramics, especially injection molded ceramics, have very rough surfaces too and need to be polished or ground in order to provide for a non-abrasive, smooth surface.

However, such material-abrasive processes may be problematic in case the metal or ceramic body comprises a glass-to-metal or glass-to-ceramic seal. The term glass as used in this description also comprises glass ceramic materials, as known from other publication from the applicant.

Suitable glass ceramics according to an embodiment may be selected from the system MO ((M=Mg, Ca)-$Al_2O_3$-BaO-$SiO_2$-$B_2O_3$, for example. Further, glass ceramics sold under brand name "Heatan" may be employed.

Usually, for instance, the hardness of the glassy and the metallic or ceramic material of such a seal will be different, resulting in an offset (or step) between the glassy material of the window and the body to which the glassy material is to be joined. Further, the metallic or ceramic material and/or the glass material may be abraded at the interface between both materials, resulting in chipping-of and/or in a groove forming at the interface region, resulting in a weakening of the glass-to-metal or glass-to-ceramic-bond formed at the interface and, thus, to a possible leakage path of the seal.

Further, with respect to such surfaces that are to be in contact with human skin, several further requirements such as a high corrosion resistance and/or a high resistance to moisture and/or sweat and/or a low leaching of potentially harmful substances, such as nickel, have to be met. This is particularly critical in case the bonding partner is a metal body.

Therefore, there is a need for improved components comprising a glass-to-material-seal, for example, a glass-to-metal-seal or a glass-to-ceramic seal, especially for components comprising a metal part (or metal body) and a glass element, such as a glass window or an insulating element or glass insulating element of a feedthrough, especially an electrical feedthrough, as well as for a process of manufacture of such components. It therefore is an object of the present invention to provide components that overcome the drawbacks of the state-of-the-art components at least partially, as well as a manufacturing process.

Summary of invention

The object of the invention is achieved by the subject-matter of the independent claims. Preferred embodiments and further refinements of the invention are specified by the subject matter of the dependent claims, the description, and the drawings.

The invention therefore relates to a component, especially a component for a housing for further components, comprising a glass element and a base body, such as a metal or ceramic body, comprising a processed surface and an opening with a wall. The glass window is seated in the opening of the body. The body is a powder injection molded (PIM) element, for example, a metal injection molded (MIM) or ceramic injection molded (CIM) element. Further, the glass of the glass element is fused into the opening so that the glass is fixedly connected to the surface of the wall and hermitically seals the opening. A surface of the wall has a roughness $R_a$ of more than 1.5 $\mu$m. The processed surface has a surface roughness $R_a$ of not more than 0.5 $\mu$m and at least 0.07 $\mu$m at least in a portion therefore. That is, at least in a portion of the processed surface of the base body a roughness of said surface is lower than a roughness of the wall (or the surface of the wall). The base body has a density of at least 95 % of the theoretical density and less than 100%, and a porosity of the base body decreases towards the processed surface in a surface region of the base body. Preferably, the processed surface of the base body is polished at least in said portion.

Such a component offers several advantages.

The component comprises a glass element, such as a glass window or an insulating element and a base body, such as a metal or ceramic body. The glass element is seated within an opening of the base body and has been fused into the opening. In this way, a very close, fixed connection between the base body and the glass of the glass element may be achieved, thereby preferably forming a hermetic seal. Therefore, the component may be used to encapsulate components, for example, electronic or optoelectronic components, that are sensitive towards contact with moisture and/or dust and/or need to be sealed off. The glass element and the base body may also be denoted as "joining partners" in the scope of the present disclosure.

Further, the processed surface of the base body comprises at least a portion in which a roughness is lower than the roughness of the wall (or the surface of the wall). That is, the roughness of the wall is higher with respect to at least a portion of the processed surface. The processed surface, in that case, preferably is the face of the base body facing away from any possible further component that may be sealed hermetically by the glass element and may also be denoted as a "free face" of the base body. The higher roughness of the wall, however, offers the advantage of offering a greater surface area, thereby enabling a strong, fixed connection between the glass element and the base body. This high surface roughness of the wall is in a surprisingly simple way provided by using, as base body (or joining partner to the glass), a powder injection molded element, such as a metal-injection molded element or a ceramic injection molded element. By powder injection molding, usually parts (or elements or bodies) may be obtained having native surfaces with a high roughness, such as a roughness $R_a$ of about 3 $\mu$m. For example, the wall may be a native surface, meaning that the wall (or the surface of the wall) has been obtained during powder injection molding and did not undergo any further material-abrasive post-processing. In contrast, a processed surface is understood to refer generally to a surface that has been post-processed at least in a portion thereof, for example by a material-abrasion process, such as, for example, grinding, polishing or cutting.

As the surface roughness is low at least in a portion of the processed surface of the base body, for example a metal or ceramic body, however, preferably over the whole of the processed surface, the processed surface is not abrasive with respect to human skin, thereby enhancing consumer safety and offering, at the same time, a high and pleasant lustre, for example, in case the base body is a metal body, a pleasant metallic lustre. Thus, the component may advantageously be used in wearables (or wearable computers) that are for example used to track human activity and/or health, such as smart watches or fitness trackers or the like, or even in jewellery products. Preferably, to achieve a low surface roughness of the processed surface (or free face) of the component and/or the base body at least in a portion thereof, the processed surface may be polished at least partially.

The processed surface of the base body has a surface roughness $R_a$ of not more than 0.5 $\mu$m and at least 0.07 $\mu$m at least in that portion of the processed surface that has the lower roughness compared to the wall. The roughness $R_a$ relates here to the arithmetical mean deviation from the center line (or mean line). The mean line of a profile is a straight line that may be generated by calculating the weighted average of a surface profile resulting in equal areas above and below the line, and may also be understood as the "best fit surface line" of the respective surface profile. Setting the roughness of the processed surface at least partially in the range indicated above may be favorable, as this allows for a surface that is smooth enough to offer a low risk to damaging human skin, thereby preventing injuries, while offering a pleasant luster, for example, in case of a metal body, a metallic luster. However, surface roughness should preferably not be too low, as in that case, surface treatment might be costly. Further, there is the risk of damage to the glass element, for example, the glass window or the insulating element, and/or the boundary between glass and metal or glass and ceramic during a very intense polishing process. This damage might, for example, result in chipping of the glass material that may further lead to a groove formation at the boundary (or interface) between the glass element and the base body, for example, at the glass-metal-boundary (or interface) and, ultimately, to a leakage path, thereby breaking the hermetic seal. Furthermore, a very long and thorough polishing and/or grinding and/or lapping process might well lead to severe abrasion of the softer material (that may, depending on the materials used, either the glass or the metal or the ceramic), resulting in a large offset (or step) at the interface.

According to an embodiment, the base body comprises a corrosion resistant material. Such an embodiment is preferred for use of the component in applications with close contact to harsh environments, but also in applications with close contact of the component to human skin, for example if the component is used as part of a housing in wearables or in jewelry products. For example, the base body is a metal body and comprises a corrosion resistant metal. Preferably, in that case, the metal body comprises a corrosion resistant steel, more preferably a stainless steel, for example an austenitic steel, particularly an austenitic steel comprising chromium. Austenitic steels are known to be corrosion resistant and are even used as corrosion resistant materials in the chemical industry. However, as austenitic steel often comprise nickel as a stabilizing element for the austenite phase, a certain nickel leaching, especially upon contact with human skin, may occur. This might lead to contact allergies. Therefore, it might be preferred, especially when using the component according to the disclosure in wearables or in jewelry products, to use a chromium austenitic steel, as chromium may inhibit nickel leaching at least partially. A particularly suitable metal is 316L steel, or AISI 316L steel, for example. As described, other steel types such as AISI 430 are also possible as well as other alloys and/or metals, such as titanium.

According to a further embodiment, the base body is a ceramic body. This may be advantageous to avoid, for example, nickel leaching and could therefore be preferred in applications with contact to human skin in order to avoid contact allergies.

In the scope of the present disclosure, if a component or a body or an element (such as a layer) is said to comprise a certain material, this is understood to encompass also embodiments in which said component or element consist predominantly, (that is, to more than 50 wt.-%), or essentially (that is, 90 wt.-% or more) or even totally of that material. That is, in the scope of the present invention, for example, the body may consist to more than 50 wt.-% of a corrosion resistant material, or consist essentially of such a material, or may even consist totally of such a material, for example, a corrosion resistant steel or a corrosion resistant ceramic.

The present disclosure further relates to a method for manufacturing a component according to an embodiment. The method for manufacturing a component (1) according comprises the following steps:

- providing a base body comprising a native surface and an opening with a wall, wherein the body is a powder injection molded (PIM) element, for example, a metal-injection molded (MIM) element or a ceramic injection molded (CIM) element,
- providing a glass body that is inserted into the opening,
- heat treating the base body and the glass body so that the glass of the glass body is fused to the wall of the base body and a glass element is formed that is seated within the opening and hermetically seals the opening,

- surface treating the native surface of the base body at least in a portion thereof in a material-ablation process, so that a processed surface is obtained, wherein a surface of the wall has a roughness $R_a$ of more than 1.5 $\mu$m, and wherein the processed surface has a surface roughness $R_a$ of not more than 0.5 $\mu$m and at least 0.07 $\mu$m at least in a portion so that wherein the processed surface has a roughness at least in a portion thereof that is lower than a roughness of the wall and/or of the native surface,
- optionally passivating the surface, preferably by forming and/or applying a passivation layer, preferably a passivation layer comprising chromium and/or oxygen, wherein preferably the base body is a metal body.

According to an embodiment, the material ablation process comprises polishing and/or grinding, as these processes are well-known processes for surface finishing for glassy materials as well as for metallic and ceramic materials.

According to a further embodiment, a substance-to-substance bond is formed between the glass material of the glass element and the material of the base body at least in a transition zone formed at an interface between the glass element and the wall. Substance-to-substance-bonds prove strong bonds, for example, adhesive bonds, thereby ensuring a strong seal. Such a substance-to-substance bond may be formed during fusing of the glass body.

The invention further relates to a component, especially a component according to embodiments, in particular a component for a housing for further components, that is produced or producible by a method according to embodiments.

A yet further aspect of the present disclosure is directed to the use of the component according to embodiments and/or produced or producible in a method according to embodiments in a wearable device, such as a smart watch and/or a fitness tracker, and/or in a jewelry product.

Description of figures

The invention will now be further explained with reference to the following figures. In the figures, like reference numerals refer to like or corresponding elements.

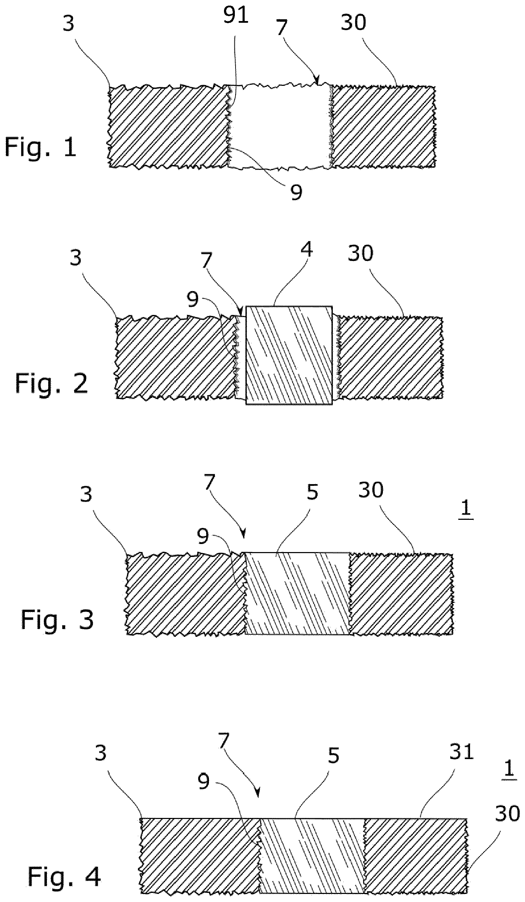

Fig. 1 to 4 depict in a series of schematically and not drawn to scale sectional views several steps of a method for manufacturing a component 1 comprising a glass window 5 and a base body 3, for example, a metal or ceramic body comprising a surface 31 and an opening 7 with a wall 9. In fig. 1, a base body 3 is provided. Base body 3 comprises opening 7 with wall 9 for accommodating a glass body 4 (not shown in fig. 1). Further, base body 3 comprises native surface 30. As can be seen in the schematic and not drawn to scale depiction of fig. 1, both native surface 30 and wall 9 have a rough surface.

That is due to base body 3 being formed via powder injection molding, that is, body 3 is a powder injection molded element. For example, base body 3 may be a metal body and be a metal injection molded (MIM) element, or base body 3 may be a ceramic body and be a ceramic injection molded (CIM) element. Native surfaces, that is, surfaces obtained during the injection molding process, such as a MIM or CIM process, without any post-treatment such as grinding or polishing, of such injection molded elements can have surface roughness, often given as $R_a$, as high as 3 μm.

In fig. 2, glass body 4 is provided. Glass body 4 is inserted into opening 7 of base body 3. The glass of glass body 4 may be any glass, however, it might be preferable to use a sealing glass material, that is, a material suitable for forming glass-to-metal bonds, especially with a low melting point. Such a glass may be preferred, as it will, upon heat treatment, fuse readily and wet the surface of base body 3, that is, wall 9 in that case. For example, the glass may be chosen to have a coefficient of thermal expansion that closely matches that of the body, or else in such a way that a compression seal may be formed. Preferably, the glassy material wets wall 9, preferably in such a way that the melted glass material may even be drawn into even small surface depressions or recesses. This may facilitate the formation of a strong bond between the glass material and wall 9. That is, according to an embodiment, base body 3 and glass body 4 are heat treated so that the glass of the glass body is fused to wall 9 of body 3. In that way, a glass element 5 (as shown in fig. 3), such as a glass window, or an insulating element, is formed that is seated within opening 7 and hermetically seals opening 7. Fig. 3 depicts component 1 comprising glass element 5 formed within opening 7 of body 3.

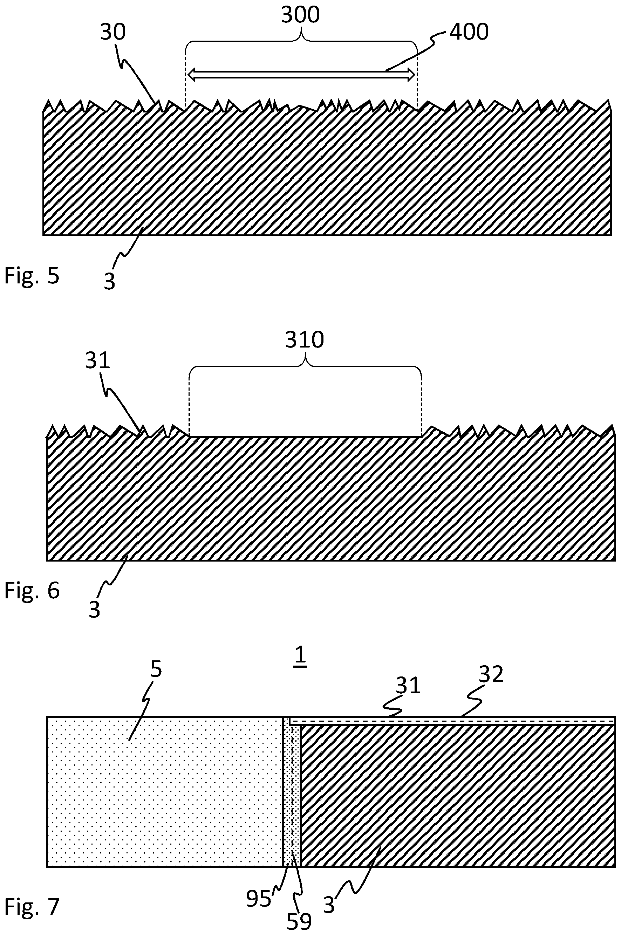

Fig. 4 depicts component 1 after a further step of the method according to the disclosure. Native surface 30 of base body 3 has, in a further step, been surface treated at least in a portion 300 (not shown in fig. 4) thereof. In this way, processed surface 31 is obtained. As can be seen in the schematic depiction of fig. 4, processed surface 31 is a smooth surface in comparison to wall 9. For example, wall 9 (or the surface of wall 9) may be a native surface with a roughness comparable to that of native surface 30, for example with a roughness $R_a$ of up to 3 μm or more, whereas processed surface 31 may have, at least in a portion (not shown here) thereof, a roughness of not more than 0.5 μm and preferably at least 0.07 μm. Surface 91 of wall 9 has a roughness $R_a$ of more than 1.5 μm, for example, of up to 3 μm or even more, the processed surface 31 has a surface roughness $R_a$ of not more than 0.5 μm and at least 0.07 μm at least in portion 310 thereof. In general, without being restricted to the embodiment shown here, a processed surface 31 will be understood as a surface that has been processed - that is, polished or ground or cut, for example - at least in a portion thereof. This will be further illustrated in fig. 5 and 6, respectively.

Fig. 5 and 6 show schematically and not drawn to scale partial sectional views of base body 3. Base body 3, a powder injection molded element, as depicted in fig. 5, comprises native surface 30, that is, in the embodiment shown here, the upper surface of base body 3. According to an embodiment, native surface 30 of base body 3 will be surface treated at least in portion 300 of native surface 30, as has schematically been indicated by arrow 400 in fig. 5. For example, this surface treatment may be accomplished by grinding native surface 30 at least in portion 300, or by polishing, or else by any suitable surface or material ablation process, such as lapping. This surface treatment of native surface results in processed surface 31, as shown in fig. 6, comprising at least portion 310 wherein the roughness is lower than that of the previous, non-processed, native surface 30. It is noted here that, in general, the wall 9 of base body 3 (or the surface 91 of wall 9) will be a native surface with a roughness comparable to that of native surface 30. For example, base body 3 may be metal body, that is, a MIM element, or else a ceramic body, that is, a CIM element in that case.

Fig. 7 is a schematic and not drawn to scale partial sectional view of component 1 with glass element 5 and base body 3. For example, body 3 may be a metal body and may comprise a corrosion resistant metal, such as a corrosion resistant steel, preferably an austenitic steel, preferably an austenitic steel comprising chromium, as such metal materials are very corrosion resistant as well as readily available. For example, 316L stainless steel (or AISI 316L steel) material may be used. In the embodiment shown in fig. 7, processed surface 31 is covered with passivation layer 32. Generally, without being limited to the embodiment shown here, processed surface 31 need not be covered totally with such a passivation layer, that is, generally, processed surface 31 may only be covered partially with passivation layer 32. A suitable passivation layer 32 is a layer that comprises chromium and/or oxygen. For example, passivation layer 32 may comprise chromium oxide or consist of chromium oxide. Further, passivation layer 32 may form in situ as integral part of processed surface 31. Generally, without being bound to the example discussed with respect to fig. 7, base body 3 may alternatively be a ceramic body, that is, a CIM element in that case, and may also comprise a passivation layer 32, for example, to prevent contact of human skin with any harmful substances leaching out of base body 3. For example, in case base body 3 is a ceramic body, the ceramic may be coloured, for example, by adding metallic or other coloring components.

Such a passivation layer 32 may be favorable especially for uses of the component in harsh environments and/or in application with close contact to human skin. For example, even though steel is a corrosion resistant material, upon contact with human skin a certain degree of surface degradation may nonetheless take place, resulting, for example, in a leaching out of certain substances. For example, nickel may be leached out of the metal body or of metallic or other coloring components comprised by an otherwise ceramic body, for example, in order to color the ceramic body, as described above, causing allergic reactions. Therefore, in order to increase consumer safety, a passivation layer 32 may be preferred. Further, it may be preferred if all of surface 31 of body 3 is covered with passivation layer 32 in order to offer the most protection available against leaching of harmful substances.

Further, in fig. 7, at the interface 59 between glass element 5 and base body 3, transition zone 95 has been indicated. Transition zone 95 is formed between glass element 5 and wall 9 (or at the surface 91 of wall 9) of base body 3. Transition zone 95 may be understood as the result of a contact reaction between the glassy material of element 5 and the material of base body 3 that may take place during fusing of glass element 5. Such a formation of transition zone 95 may be very advantageous, as it may result in a very strong bond between window 5 and body 3 (or wall 9 of body 3), ensuring a hermetic seal. For example, transition zone 95 may be formed as an interdiffusional layer, or as a melt-reaction zone. The latter may for example be formed during fusing glass element 5 if the glass at least partially melts the material of base body 3, whereas an interdiffusional layer may be formed by diffusion of elements of the glassy material into the material of base body 3 and vice versa.

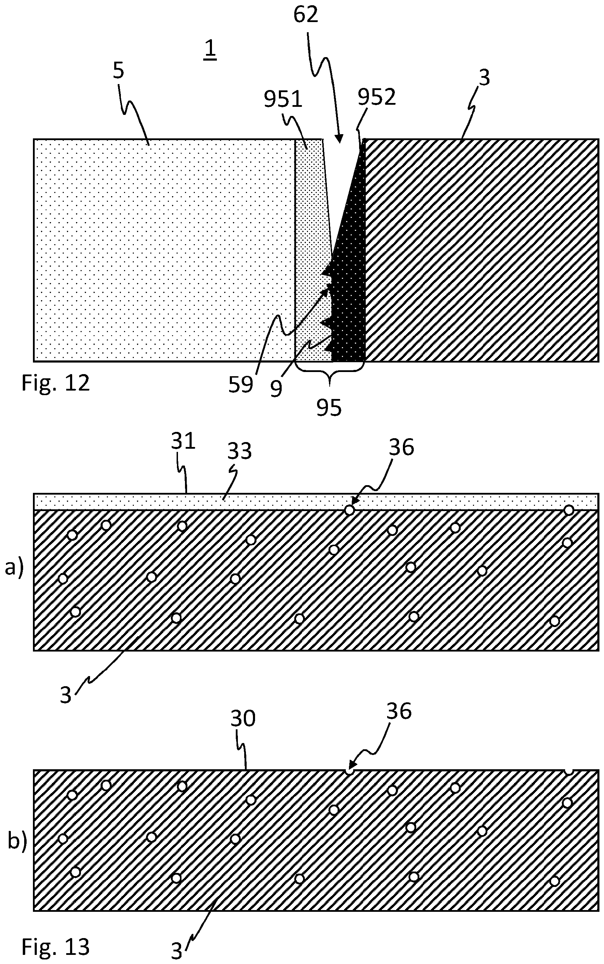

Further, it may be preferred if passivation layer 32 covers transition zone 95 at least partially, as depicted schematically in fig. 7. However, in general, without being limited to the embodiment shown in fig. 7, passivation layer 32 may cover transition zone 95 totally. This may be particularly preferred if the transition zone 95 is more prone to chemical attack and/or leaching out of harmful such as nickel, for example, in order to ensure a high consumer safety. This will we explained in greater detail further below with respect to fig. 12.

According to a preferred embodiment, a substance-to-substance bond is formed between the glass of glass element 5 and wall 9 of base body 3. Here, a substance-to-substance-bond is understood as a bond between materials wherein the bonding partners (that is, base body 3 and glass element 5) are joined to each other by an atomic and/or molecular force, such as adhesion.

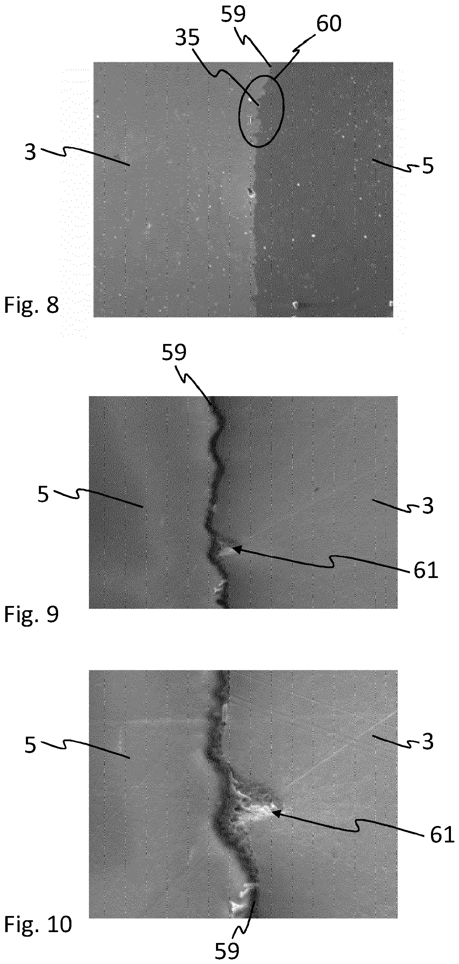

According to a further embodiment, wall 9 has a surface structure that is aperiodic. As has been shown in fig. 1, for example, wall 9 may be understood to have a native surface 91 of base body 3, and therefore, surface roughness of wall 9 (or wall surface 91) will be high with respect to the surface roughness at least in portion 310 of processed surface 31. For example, a typical surface roughness value of wall 9 (or surface 91 of wall 9) may be a $R_a$-value of about 3 $\mu$m. This may help in ensuring a strong bond between glass element 5 and wall 9 and, thus, base body 3, as the surface area - and, thus, a possible reaction zone, or a zone for forming adhesive bonds - is increased. Further, a high surface roughness may result in interlock 35 formed between glass element 5 and wall 9 at least in a portion 60 of interface 59 between glass window 5 and wall 9, as shown in fig. 8. Fig. 8 depicts, in a partial top view, a SEM micrograph of component 1 with base body 3 (that is, in the case depicted here, a metal body) at the left side of fig. 8 and glass element 5 at the right side of fig. 8,. Further, interface 59 is indicated, formed between glass element 5 and base body 3 or rather, wall 9 of body 3, that is, as has been stated above, a metal body. In this top view, interface 59 may be regarded as a profile of the surface structure of wall 9. As can be seen in portion 60 of interface 59, interlock 35 is formed at the interface 59. That is, at interface 59, an interlock, or an interlocking feature, 35 is formed such that the glassy material of element 5 and the material of base body 3 are intertwined. For example, at interface 59 undercuts or back taper features may be formed at least in a portion 60 thereof. This further helps in ensuring a strong bond between glass element 5 and base body 3. In that way, the bond may also at least partially be regarded as a positive-locking bond. According to an embodiment, the bond formed between element 5 and wall 9 and/or base body 3 is a positive-locking bond, preferably a positive locking bond and a substance-to-substance-bond. Generally, such an interlock 35 may also be very advantageous for accomplishing a surface treatment comprising a material ablation process, as in case of an interlock 35 formed at interface 59, surface chipping 61 of the material of base body 3 and/or the glassy material can be lessened or even be totally avoided. Generally, even though the structure of interface 59 and interlock 35 has been explained in detail with respect to base body 4 being a metal body, generally, without being restricted to the embodiment of fig. 8, such interlocks 35 and interfaces 95 may also be formed between glass element 5 and a ceramic body 3. Further, generally, glass element 5 may be a glass window, or an insulating element, for example, an insulating element in a feedthrough.

However, even though the surface structure of wall 9 may be very advantageous in terms of providing a strong bond, it has to be pointed out that according to a preferred embodiment, the surface texture of wall 9 should be aperiodic. That is, in case of a periodic surface texture of wall 9, possible leakage paths may be provided, resulting in breakage of the otherwise strong seal.

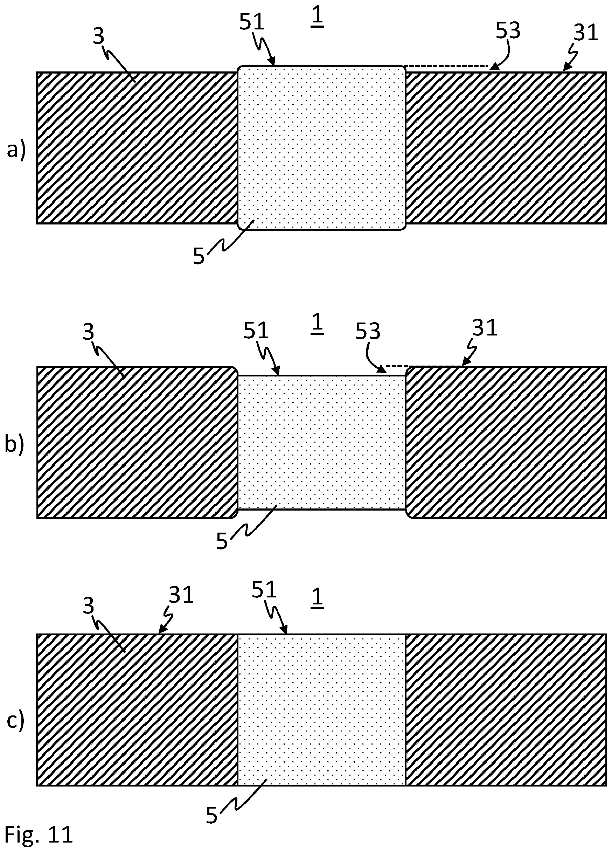

According to a further embodiment, glass element 5 comprises glass surface 51, as depicted in fig. 11 a) to c), for example. According to the embodiments depicted schematically and not drawn to scale in figures 11 a) and b), offset 53 between surfaces 51 and 31 results. Preferably, offset 53 between the level of glass surface 51 and processed surface 31 is at most 1 $\mu$m, preferably lower, and most preferred glass surface 51 and processed surface 31 are flush with each other, as depicted in fig. 11 c). The advantage of this will now be explained further with reference to figures 9, 10, and 12, respectively. Figures 9 and 10 show SEM micrographs of interface 59 between glass element 5 and wall 9 of base body 3 that is, in the embodiment shown in fig. 9 and 10, a metal body. In the example shown in figures 9 and 10, the glassy material of element 5, that is, in the schematic depiction shown here, a window, for example, protrudes out of opening 7, as has also been shown schematically in fig. 11 a). This not slow leads to offset 53, but is also detrimental to surface treatment such as polishing and/or grinding. For example, because of element 5 protruding, which results in offset 53, surface treating native surface 30 may lead to material chipping 61 at interface 59. Further, groove 62 may be formed at interface 59, as has been shown in fig. 12.

In fig. 12, a schematic and not drawn to scale partial sectional view of a component 1 is shown. To the left, element 5 is depicted, whereas to the right, base body 3 is shown. In the embodiment discussed with respect to fig. 12, base body 3 is a metal body, however, in general, such material corrosion may also occur at ceramic-glass-interfaces so that, without being restricted to the embodiment discussed with respect to fig. 12, base body 3 may also be a ceramic body. Further, in fig. 12, transition zone 95 formed at interface 59 between element 5 and base body 3 (that is, wall 9 of body 3, that is, in the embodiment discussed here, a metal body) is shown schematically. Transition zone 95 has been depicted here as comprising a first subzone 951 and a second subzone 952 that can be understood as an altered glass zone (subzone 951) and an altered body subzone (subzone 952), for example, an altered metal body subzone. For example, subzone 951 may be altered by incorporating, for example, because of diffusion processes, elements stemming from base body 3, and in a like manner, subzone 952 may be altered by incorporating glass elements. Such processes may be a result of the heat treatment during fusion of the glass body (not shown here) to obtain glass element 5. However, due to these processes the transition zone may be more prone to corrosion, as subzone 952 may be depleted in corrosion-inhibiting elements such as chromium, for example, in case base body 3 is a metal body or comprises metallic components, for example, for coloring an otherwise ceramic body. Therefore, in case of forming groove 62, metal corrosion will likely take place. Further, in case of groove formation any passivation layer 32 formed on processed surface 31 and/or transition zone 95 will be abraded, which facilitates metal corrosion even further. Such groove formation and, thus, corrosion, may at least be lessened if offset 53 is set not to be to high, that is, at most 1 $\mu$m. Most preferably, glass surface 51 and processed surface 31 are flush with each other, that is, offset 53 is zero in this case.

As schematically depicted in fig. 13 a) and b), base body 3 has a density of at least 95% of a theoretical density of the body, preferably more than 95 %, and less than 100%, wherein a porosity of body 3 decreases towards processed surface 31 in a surface region 33 of body 3.

The theoretical density of metal body 3 is generally considered to be the density of the material of metal body 3, that is, in case base body 3 consists of a stainless steel material, the density of said stainless steel, for example, or in case base body 3 comprises an alumina ceramic, the density of $Al_2O_3$, for example.

That is, as depicted in fig. 13 a) and b), base body 3 is a body comprising pores 36. This may be advantageous, as, for example, these pores 36 may be present at a surface of body 3, for example, at native surface 30 in the form of an open pore as shown in fig. 13 b), but of course also at wall 9 (not shown in fig. 13 b), thereby increasing the surface area. The pores can be introduced during the PIM, especially MIM process. As has been explained in greater detail above, an increased surface area of wall 9 may result in a stronger bond formed at the interface between the glassy material and the material of base body 3, such as a metallic or ceramic material. Therefore, base body 3 comprising pores 36 and, thereby, having a density that is less than 100% of a theoretical density of the material of body 3.

In other words, body 3 may be understood to have a porosity. Porosity $\Phi$ is in the scope of the present disclosure considered to be the ratio of the sum of the volumes of the pores 36, $V_p$, relative to the volume of body 3, $V_b$ (including the pore volume):

$$\Phi = \frac{V_p}{V_b}$$

The porosity of body 3 decreases towards processed surface 31 in surface region 33 of body 3.

As has been discussed above and is depicted in fig. 13 a), base body 3 having pores 36 may result in open pores or open voids at native surface 30 as well as at wall 9, as wall 9 (or the surface of wall 9) in general is understood to be a native surface of metal body 3. However, these open pores or voids at a native surface might be disadvantageous for application with contact to human skin, as such a surface may cause injuries, e.g. scratches. Therefore, body 3 comprises a surface region 33 so that the porosity of body 3 decreases towards a processed surface 31 thereof. For example, this might be accomplished by the material ablation process of the surface treating step.

In an advantageous embodiment, the material ablation process, such as grinding and/or polishing and/or lapping is performed in a way to interact with the material property of the base body 3, especially the metal body. Then the ductile behaviour of the metal can be utilised to close pores near the surface of the body 3. It is assumed that the underlying mechanism is induced by the mechanical force the ablation process exerts on the pane parallel to the surface of base body 3. This force is assumed to deform, especially plastically deform the surface area of base body 3 so that pores being near the surface or even being opened up due to the ablation are closed, virtually by lateral movement of material. Therefore, during the ablation process, material is removed from the surface of base body 3 and at the same time at least portions of the surface areas are deformed, leading to a closure of pores. It is also possible that removed material from the surface is again accumulating in opened pores, densifies during the mechanical treatment and is thereby closing pores. Especially the last effect can also be relevant if the body is made from a ceramic material which is less ductile than a metal material. All of those effects could also work together and are also applicable to the groove. The mechanical treatment of the surface could also lead to a surface-hardening. The described effects are perfectly working together with the glassing-in of the glass window or glass insulation material. The glassing-in benefits from the rough surface of wall, providing a good connection with the molten glass material by the provided large surface area and possible diffusion zones which enable a chemical bond between the glass and base body 3, and the mechanical surface treatment provides base body with a smoother surface which enables desired mechanical or aesthetical properties, whereby the transition zone between base body 3 and glass element 5 can also be improved, especially mechanically stabilized, during the surface treatment.

According to an embodiment, base body 3 comprises pores 36 and/or voids and during the material-ablation process pores 36 and/or voids are closed at least in a portion 310 of the processed surface 31 of the base body 3. Preferably, the pores 36 and/or voids are closed over the whole of processed surface 31.

Preferably, base body 3 is a metal body and the material-ablation process exerts a force in a plane parallel to the surface 30 of the base body 3 (for example as has been indicated with respect to arrow 400 in fig. 5), wherein such forces contribute to or lead to the closure of the pores 36 and/or voids.Reference is made to surface chipping 61 in fig. 10, clearly showing the pore structure of base body 3 that is, in the embodiment shown in fig. 10, whereas in the non-chipped region of processed surface 31 no voids or pores are seen. Even though the pore structure of base body 3 has been shown with respect to a metal body, it is understood here that base body 3 being porous is not restricted to metal bodies, but that a ceramic body 3 may also comprise pores 36 that may, for example, be due to the powder injection molding manufacturing process of base body 3.

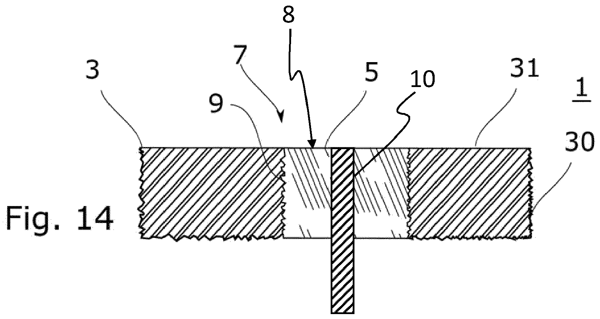

For many applications and without restriction to the examples shown in the figures, glass element 5 forms a glass window, in particular to transmit light. For example, this may be the case for a wearable device. According to a further, alternative or additional embodiment, glass element 5 may be an insulating element of an electrical feedthrough 8. An embodiment of such a component 1 with electrical feedthrough 8 is shown in fig. 14. The example of fig. 14 is a variant of fig. 4. Generally, without restriction to the embodiment shown in fig. 14, feedthrough 8 comprises at least one electrically conductive pin 10 being fixed within opening 7 and electrically insulated from base body 3 by glass element 5, that is an insulating element in this case. Pin 10 extends through glass element 5 so that pin 10 may be electrically connected at opposite sides of glass element 5. As in the embodiment shown in fig. 4, surface 31 of base body 3 is a processed surface, that is, at least in a portion (not shown) of surface 31 the roughness is lower than that of a native surface 30 of base body 3. Here, the whole of surface 31 has been processed, that is, has been polished and/or ground and/or lapped, for example. Further, glass surface 51 (not indicated here) and processed surface 31 are flush in the example depicted in fig. 14. Further, in this case, pin 10 may be planed so that the end of pin 10 flushes with the glass surface 51.

**Claims**

1. A component (1) comprising a glass element (5) and a base body (3) comprising a processed surface (31) and an opening (7) with a wall (9), the glass element (5) being seated in the opening (7) of the body (3), wherein the base body (3) is an powder injection molded element, wherein the glass of the glass element (5) is fused into the opening (7) so that the glass is fixedly connected to the surface of the wall (9) and hermetically seals the opening (7), and wherein a surface (91) of the wall (9) has a roughness $R_a$ of more than 1.5 $\mu$m, and wherein the processed surface (31) has a surface roughness $R_a$ of not more than 0.5 $\mu$m and at least 0.07 $\mu$m at least in a portion (310) thereof so that at least in a portion (310) of the processed surface (31) a roughness of said surface (31) is lower than a roughness of the wall (9), wherein the base body (3) has a density of at least 95 % of the theoretical density and less than 100%, and wherein a porosity of the base body (3) decreases towards the processed surface (31) in a surface region (33) of the base body (3).

2. The component (1) according to claim 1, wherein the base body (3) is a metal body and comprises a corrosion resistant metal, preferably a corrosion resistant steel, more preferably an austenitic steel, preferably an austenitic steel comprising chromium, preferably AISI 316 and/or AISI 3161, or titanium.

3. The component (1) according to any of claims 1 to 2, wherein the glass element (5) comprises a glass surface (51), wherein an offset (53) between the level of the glass surface (51) and the processed surface (31) is at most 1 $\mu$m, preferably lower, and wherein most preferred the glass surface (51) and the processed surface (31) are flush with each other.

4. The component (1) according to any of claims 1 to 3, wherein the processed surface (31) of the base body (3) is at least partially covered with a passivation layer (32).

5. The component (1) according to any of claims 1 to 4, further comprising a transition zone (95) formed between the glass element (5) and the wall (9) of the body (3),

6. The component (1) according to claim 5, wherein the passivation layer (32) covers the surface (91) of the transition zone (95) at least partially.

7. The component (1) according to claim 5 or 6, wherein an interlock (35) is formed at an interface (59) between the glass element (5) and the wall (9) at least in a portion (60) thereof.

8. The component (1) according to any of claims 1 to 7, wherein the wall (9) has a surface texture that is aperiodic.

9. The component (1) according to any of claims 1 to 8, wherein a substance-to-substance-bond is formed between the glass of glass element (5) and the wall (9) of the base body (3).

10. The component (1) according to any of claims 1 to 9, wherein the processed surface (31) of the base body (3) is polished at least in said portion (310).

11. A method for manufacturing a component (1) according to any of claims 1 to 10, comprising the following steps:

   - providing a base body (3) comprising a native surface (30) and an opening (7) with a wall (9), wherein the base body (3) is an powder injection molded element,
   - providing a glass body (4) that is inserted into the opening (7),
   - heat treating the base body (3) and the glass body (4) so that the glass of the glass body (4) is fused to the wall (9) of the base body (3) and a glass element (5) is formed that is seated within the opening (7) and hermetically seals the opening (7),
   - surface treating the native surface (30) of the base body (3) at least in a portion (300) thereof in a material-ablation process, so that a processed surface (31) is obtained, wherein a surface (91) of the wall (9) has a roughness $R_a$ of more than 1.5 $\mu$m, and wherein the processed surface (31) has a surface roughness $R_a$ of not more than 0.5 $\mu$m and at least 0.07 $\mu$m at least in a portion (310) thereof so that the processed surface (31) has a roughness at least in a portion (310) thereof that is lower than a roughness of the wall (9) and/or of the native surface (31),
   - optionally passivating the processed surface (31), preferably by forming and/or applying a passivation layer (32), preferably a passivation layer (32) comprising chromium and/or oxygen.

12. The method according to claim 11, wherein the material-ablation process comprises polishing and/or grinding and/or lapping.

13. The method according to claim 11 or 12, wherein the base body (3) comprises pores (36) and/or voids and wherein during the material-ablation process pores (36) and/or voids are closed at least in a portion (310) of the processed surface (31) of the base body (3).

14. The method according to claim 13, wherein the base body (3) is a metal body and wherein the material-ablation process exerts a force in a plane parallel to the surface of the base body (3), wherein such forces contribute to or lead to the closure of the pores (36) and/or voids.

15. The method according to any of claims 11 or 14, wherein a substance-to-substance bond is formed between the glass of the glass element (5) and the material of the base body (3) at least in a transition zone (95) formed at an interface (95) between the glass element (5) and the wall (9).

16. Use of a component (1) according to any of claims 1 to 10 and/or a component (1) produced in a method according to any of claims 11 to 15 in a wearable device, such as a smart watch and/or a fitness tracker, and/or in a jewelry product.

**Patentansprüche**

1. Komponente (1) umfassend ein Glaselement (5) und einen Grundkörper (3), der eine bearbeitete Oberfläche (31) und eine Öffnung (7) mit einer Wandung (9) aufweist, wobei das Glaselement (5) in der Öffnung (7) des Körpers (3) sitzt, wobei der Grundkörper (3) ein Pulverspritzgusselement ist, wobei das Glas des Glaselements (5) so in die Öffnung (7) eingeschmolzen ist, dass das Glas fest mit der Oberfläche der Wandung (9) verbunden ist und die Öffnung (7) hermetisch verschließt, und wobei eine Oberfläche (91) der Wandung (9) eine Rauheit $R_a$ von mehr als 1,5 $\mu$m aufweist, und wobei die bearbeitete Oberfläche (31) eine Oberflächenrauheit $R_a$ von nicht mehr als 0,5 $\mu$m und mindestens 0,07 $\mu$m aufweist, zumindest in einem Teilbereich (310) selbiger, so dass zumindest in einem Teilbereich (310) der bearbeiteten Oberfläche (31) eine Rauheit der Oberfläche (31) geringer ist als eine Rauheit der Wandung (9), wobei der Grundkörper (3) eine Dichte von mindestens 95 % und weniger als 100 % der theoretischen Dichte aufweist, und wobei eine Porosität des Grundkörpers (3) in einer Oberflächenzone (33) des Grundkörpers (3) zu der bearbeiteten Oberfläche (31) hin abnimmt.

2. Komponente (1) nach Anspruch 1, wobei der Grundkörper (3) ein Metallkörper ist und ein korrosionsbeständiges Metall, bevorzugt einen korrosionsbeständigen Stahl, besonders bevorzugt einen austenitischen Stahl, vorzugsweise einen austenitischen Stahl mit Chrom, bevorzugt AISI 316 und/oder AISI 3161, oder Titan umfasst.

3. Komponente (1) nach einem der Ansprüche 1 bis 2, wobei das Glaselement (5) eine Glasoberfläche (51) aufweist, wobei ein Versatz (53) zwischen der Ebene der Glasoberfläche (51) und der bearbeiteten Oberfläche (31) höchstens 1 $\mu$m, bevorzugt weniger beträgt, und wobei, besonders bevorzugt, die Glasoberfläche (51) und die bearbeitete Oberfläche (31) zueinander fluchten.

4. Komponente (1) nach einem der Ansprüche 1 bis 3, wobei die bearbeitete Oberfläche (31) des Grundkörpers (3) zumindest teilweise mit einer Passivierungsschicht (32) abgedeckt ist.

5. Komponente (1) nach einem der Ansprüche 1 bis 4, weiterhin mit einer Übergangszone (95), die zwischen dem Glaselement (5) und der Wandung (9) des Körpers (3) ausgebildet ist.

6. Komponente (1) nach Anspruch 5, wobei die Passivierungsschicht (32) die Oberfläche (91) der Übergangszone (95) zumindest teilweise abdeckt.

7. Komponente (1) nach Anspruch 5 oder 6, wobei an einer Grenzfläche (59) zwischen dem Glaselement (5) und der Wandung (9), zumindest in einem Teilbereich (60) selbiger, eine Verzahnung (35) ausgebildet ist.

8. Komponente (1) nach einem der Ansprüche 1 bis 7, wobei die Wandung (9) eine aperiodische Oberflächenstruktur aufweist.

9. Komponente (1) nach einem der Ansprüche 1 bis 8, wobei zwischen dem Glas des Glaselements (5) und der Wandung (9) des Grundkörpers (3) eine stoffschlüssige Verbindung ausgebildet ist.

10. Komponente (1) nach einem der Ansprüche 1 bis 9, wobei die bearbeitete Oberfläche (31) des Grundkörpers (3) zumindest in dem Teilbereich (310) poliert ist.

11. Verfahren zur Herstellung einer Komponente (1) nach einem der Ansprüche 1 bis 10, mit folgenden Schritten:

- Bereitstellen eines Grundkörpers (3) mit einer nativen Oberfläche (30) und einer Öffnung (7) mit einer Wandung (9), wobei der Grundkörper (3) ein Pulverspritzgusselement ist,
- Bereitstellen eines Glaskörpers (4), der in die Öffnung (7) eingesetzt wird,
- Wärmebehandlung des Grundkörpers (3) und des Glaskörpers (4) in solcher Weise, dass das Glas des Glaskörpers (4) mit der Wandung (9) des Grundkörpers (3) verschmilzt und ein Glaselement (5) ausgebildet wird, das in der Öffnung (7) sitzt und die Öffnung (7) hermetisch verschließt,
- Oberflächenbehandlung der nativen Oberfläche (30) des Grundkörpers (3) in zumindest einem Teilbereich (300) selbiger in einem materialabtragenden Prozess, so dass eine bearbeitete Oberfläche (31) erhalten wird, wobei eine Oberfläche (91) der Wandung (9) eine Rauheit $R_a$ von mehr als 1,5 $\mu$m aufweist und wobei die bearbeitete Oberfläche (31) zumindest in einem Teilbereich (310) selbiger eine Oberflächenrauheit $R_a$ von nicht mehr als 0,5 $\mu$m und von mindestens 0,07 $\mu$m aufweist, so dass die bearbeitete Oberfläche (31) zumindest in einem Teilbereich (310) selbiger eine Rauheit aufweist, die geringer ist als eine Rauheit der Wandung (9) und/oder der nativen Oberfläche (31),
- optional Passivieren der bearbeiteten Oberfläche (31), vorzugsweise durch Ausbilden und/oder Aufbringen einer Passivierungsschicht (32), vorzugsweise einer Passivierungsschicht (32), die Chrom und/oder Sauerstoff enthält.

12. Verfahren nach Anspruch 11, wobei der materialabtragende Prozess Polieren und/oder Schleifen und/oder Läppen umfasst.

13. Verfahren nach Anspruch 11 oder 12, wobei der Grundkörper (3) Poren (36) und/oder Hohlräume aufweist und wobei während des materialabtragenden Prozesses Poren (36) und/oder Hohlräume zumindest in einem Teilbereich (310) der bearbeiteten Oberfläche (31) des Grundkörpers (3) verschlossen werden.

14. Verfahren nach Anspruch 13, wobei der Grundkörper (3) ein Metallkörper ist und wobei durch den materialabtragenden Prozess eine Kraft in einer Ebene parallel zu der Oberfläche des Grundkörpers (3) ausgeübt wird, wobei diese Kräfte zum Verschluss der Poren (36) und/oder Hohlräume beitragen oder führen.

15. Verfahren nach einem der Ansprüche 11 oder 14, wobei zwischen dem Glas des Glaselements (5) und dem Material des Grundkörpers (3) zumindest in einer an einer Grenzfläche (95) zwischen dem Glaselement (5) und der Wandung (9) ausgebildeten Übergangszone (95) eine stoffschlüssige Verbindung ausgebildet wird.

16. Verwendung einer Komponente (1) nach einem derAnsprüche 1 bis 10 und/oder einer in einem Verfahren nach einem derAnsprüche 11 bis 15 hergestellten Komponente (1) in einem am Körper tragbaren Gerät wie beispielsweise einer Smartwatch und/oder einem Fitness-Tracker und/oder in einem Schmuckerzeugnis.

**Revendications**

1. Composant (1) comprenant un élément en verre (5) et un corps de base (3) comprenant une surface traitée (31) et une ouverture (7) avec une paroi (9), l'élément en verre (5) étant ajusté dans l'ouverture (7) du corps (3), dans lequel le corps de base (3) est un élément moulé par injection de poudre, dans lequel le verre de l'élément en verre (5) est fondu dans l'ouverture (7), de sorte que le verre est lié de manière fixe à la surface de la paroi (9) et scelle hermétiquement l'ouverture (7), et dans lequel une surface (91) de la paroi (9) a une rugosité $R_a$ supérieure à 1,5 $\mu$m, et dans lequel la surface traitée (31) a une rugosité de surface $R_a$ inférieure ou égale à 0,5 $\mu$m et d'au moins 0,07 $\mu$m au moins dans une partie (310) de celle-ci, de sorte qu'au moins dans une partie (310) de la surface traitée (31), une rugosité de ladite surface (31) est inférieure à une rugosité de la paroi (9), dans lequel le corps de base (3) a une masse volumique égale à au moins 95 % de la masse volumique théorique et inférieure à 100 %, et dans lequel une porosité du corps de base (3) diminue vers la surface traitée (31) dans une région de surface (33) du corps de base (3).

2. Composant (1) selon la revendication 1, dans lequel le corps de base (3) est un corps métallique et comprend un métal résistant à la corrosion, de préférence un acier résistant à la corrosion, mieux encore un acier austénitique, de préférence un acier austénitique comprenant du chrome, de préférence AISI 316 et/ou AISI 3161, ou du titane.

3. Composant (1) selon l'une quelconque des revendications 1 à 2, dans lequel l'élément en verre (5) comprend une surface de verre (51), dans lequel un décalage (53) entre le niveau de la surface de verre (51) et la surface traitée (31) vaut au plus 1 $\mu$m, de préférence moins, et dans lequel de préférence encore, la surface de verre (51) et la surface traitée (31) sont de niveau l'une par rapport à l'autre.

4. Composant (1) selon l'une quelconque des revendications 1 à 3, dans lequel la surface traitée (31) du corps de base (3) est au moins partiellement recouverte d'une couche de passivation (32).

5. Composant (1) selon l'une quelconque des revendications 1 à 4, comprenant en outre une zone de transition (95) formée entre l'élément en verre (5) et la paroi (9) du corps (3).

6. Composant (1) selon la revendication 5, dans lequel la couche de passivation (32) recouvre la surface (91) de la zone de transition (95) au moins partiellement.

7. Composant (1) selon la revendication 5 ou 6, dans lequel un emboîtement (35) est formé au niveau d'une interface (59) entre l'élément en verre (5) et la paroi (9) au moins dans une partie (60) de celle-ci.

8. Composant (1) selon l'une quelconque des revendications 1 à 7, dans lequel la paroi (9) a une texture de surface qui est apériodique.

9. Composant (1) selon l'une quelconque des revendications 1 à 8, dans lequel une liaison de substance sur substance est formée entre le verre de l'élément en verre (5) et la paroi (9) du corps de base (3).

10. Composant (1) selon l'une quelconque des revendications 1 à 9, dans lequel la surface traitée (31) du corps de base (3) est polie au moins dans ladite partie (310).

11. Procédé de fabrication d'un composant (1) selon l'une quelconque des revendications 1 à 10, comprenant les étapes suivantes :

- fournir un corps de base (3) comprenant une surface native (30) et une ouverture (7) avec une paroi (9), dans lequel le corps de base (3) est un élément moulé par injection de poudre,
- fournir un corps en verre (4) qui est inséré dans l'ouverture (7),
- réaliser un traitement thermique du corps de base (3) et du corps en verre (4), de telle manière que le verre du corps en verre (4) fusionne avec la paroi (9) du corps de base (3) et qu'un élément en verre (5) est formé, qui est ajusté dans l'ouverture (7) et qui scelle hermétiquement l'ouverture (7),
- réaliser un traitement de surface de la surface native (30) du corps de base (3) au moins dans une partie (300) de celle-ci dans un processus d'enlèvement de matière, de sorte qu'une surface traitée (31) est obtenue, dans lequel une surface (91) de la paroi (9) a une rugosité $R_a$ supérieure à 1,5 $\mu$m, et dans lequel la surface traitée (31) a une rugosité de surface $R_a$ infé-

rieure ou égale à 0,5 μm et d'au moins 0,07 μm au moins dans une partie (310) de celle-ci, de sorte que la surface traitée (31) a une rugosité au moins dans une partie (310) de celle-ci qui est inférieure à une rugosité de la paroi (9) et/ou de la surface native (31),

- éventuellement, passiver la surface traitée (31), de préférence en formant et/ou en appliquant une couche de passivation (32), de préférence une couche de passivation (32) comprenant du chrome et/ou de l'oxygène.

**12.** Procédé selon la revendication 11, dans lequel le processus d'enlèvement de matière comprend un polissage et/ou meulage et/ou rodage.

**13.** Procédé selon la revendication 11 ou 12, dans lequel le corps de base (3) comprend des pores (36) et/ou des vides et dans lequel, pendant le processus d'enlèvement de matière, des pores (36) et/ou vides sont fermés au moins dans une partie (310) de la surface traitée (31) du corps de base (3).

**14.** Procédé selon la revendication 13, dans lequel le corps de base (3) est un corps métallique et dans lequel le processus d'enlèvement de matière exerce une force dans un plan parallèle à la surface du corps de base (3), ces forces contribuant ou conduisant à la fermeture des pores (36) et/ou vides.

**15.** Procédé selon l'une quelconque des revendications 11 et 14, dans lequel une liaison de substance sur substance est formée entre le verre de l'élément en verre (5) et le matériau du corps de base (3) au moins dans une zone de transition (95) formée au niveau d'une interface (95) entre l'élément en verre (5) et la paroi (9).

**16.** Utilisation d'un composant (1) selon l'une quelconque des revendications 1 à 10 et/ou d'un composant (1) produit dans un procédé selon l'une quelconque des revendications 11 à 15 dans un objet personnel connecté, tel qu'une montre intelligente et/ou un moniteur d'activité physique, et/ou dans un produit de joaillerie.

Fig. 1

Fig. 2

Fig. 3

Fig. 4

300

30

400

Fig. 5    3

310

31

Fig. 6    3

1

5    31    32

Fig. 7    95    3
         59

EP 3 974 400 B1

Fig. 8

Fig. 9

Fig. 10

15

Fig. 11

1

62

5

951    952    3

Fig. 12    59  9    95

31    33    36

a)

3

30    36

b)

Fig. 13    3

Fig. 14

**REFERENCES CITED IN THE DESCRIPTION**

**Patent documents cited in the description**

- US 5243492 A

- US 4921738 A